# EUROPÄISCHE PATENTSCHRIFT

(11) **EP 1 574 394 B1**
(45) Veröffentlichungstag und Bekanntmachung des Hinweises auf die Patenterteilung: **01.04.2009**
(21) Anmeldenummer: 04029776.4
(22) Anmeldetag: 16.12.2004
(51) Int. Cl.: B60R 5/04

(54) **Funktionseinheit für einen Fahrzeuginnenraum**
Functional unit for an inner space of a vehicle
Unité fonctionelle pour l'habitacle d'un véhicule

(30) Priorität: 18.02.2004 DE 102004008874
(43) Veröffentlichungstag der Anmeldung: 14.09.2005
(73) Patentinhaber: BOS GmbH & Co. KG, 73760 Ostfildern (DE)
(72) Erfinder: Zaiser, Markus, 73257 Köngen (DE); Seidl, Peter, 73547 Lorch (DE); Seeg, Thomas, 73760 Ostfildern (DE)
(74) Vertreter: Patentanwälte Ruff, Wilhelm, Beier, Dauster & Partner

(56) Entgegenhaltungen:
- EP-A- 0 405 232
- EP-A- 1 332 919
- DE-C- 10 134 085
- US-B1- 6 416 103

## Beschreibung

Die Erfindung betrifft eine Funktionseinheit für einen Fahrzeuginnenraum mit einem formstabilen Funktionsprofil, das zwei einander gegenüberliegende Stirnendbereiche aufweist, die in fahrzeuginnenraumseitig angeordneten Führungsprofilierungen längsbeweglich angeordnet sind, nach den Oberbegriff des Anspruchs 1.

Eine derartige Funktionseinheit für einen Fahrzeuginnenraum ist in Form einer Laderaumabdeckung für Kombi-Personenkraftwagen allgemein bekannt -z.B. aus EP 0 405 232 A2-. Eine derartige Laderaumabdeckung weist eine Abdeckplane auf, die auf einer in einem Kassettengehäuse gelagerten Wickelwelle auf- und abwickelbar gehalten ist. An ihrem in Auszugrichtung vorderen Stirnbereich ist die Abdeckplane mit einer formstabilen Auszugleiste versehen, die über die Seitenränder der Abdeckplane seitlich hinausragende Stirnendbereiche aufweist. Die Stirnendbereiche sind in horizontal knapp unterhalb einer Bordkante des Fahrzeuginnenraumes verlegten Führungsschienen positionierbar und in Längsrichtung dieser Führungsschienen quer zu einer Längsachse der Auszugstange verschiebbar und damit längsbeweglich angeordnet. Dadurch ist es möglich, die Auszugstange bei einer Auszieh- oder Einrollbewegung der Abdeckplane definiert zu führen. Längsbewegungen, d.h. insbesondere Verschiebbewegungen, führen zwischen den Stirnendbereichen der Auszugstange und den fahrzeugraumseitigen Führungsschienen zu einem Gleitwiderstand, der die manuellen Betätigungskräfte bei einem Ausziehen der Abdeckplane erhöht.

Aufgabe der Erfindung ist es, eine Funktionseinheit der eingangs genannten Art zu schaffen, die eine leichtgängige Längsbewegung des Funktionsprofils innerhalb der Führungsprofilierungen ermöglicht.

Diese Aufgabe wird dadurch gelöst, dass jeder Stirnendbereich mit wenigstens einem Rollelement versehen ist, das um wenigstens eine Drehachse derart drehbeweglich an dem Stirnendbereich gelagert ist, dass das Rollelement bei einer Längsbewegung des Stirnendbereiches an wenigstens einem Flächenbereich der zugeordneten Führungsprofilierung abrollt. Als Flächenbereiche der Führungsprofilierungen sind insbesondere die mit dem wenigstens einem Rollelement in Berührung gelangenden Laufflächen an jeder Führungsprofilierung anzusehen. Als Führungsprofilierungen sind insbesondere Führungsschienen, Führungsnuten oder andere Linearprofilierungen vorgesehen, die geradlinig und/oder gekrümmt im Fahrzeuginnenraum, vorzugsweise an seitlichen Begrenzungsflächen des Fahrzeuginnenraumes, angeordnet sind. Die Führungsprofilierungen können auf entsprechenden Begrenzungsflächen aufsitzen oder auch in diesen Begrenzungsflächen integriert sein. Vorzugsweise sind entsprechende Führungsprofilierungen in Verkleidungsteilen von Fahrzeugkarosseriesäulen integriert und erstrecken sich ober- und/oder unterhalb oder auf Höhe einer Fahrzeugbordkante. Vorzugsweise sind Führungsprofilierungen im Bereich von Karosserie-D-Säulen vorgesehen und erstrecken sich etwa auf Höhe einer Fahrzeugbordkante in Richtung eines Dachhimmels des Fahrzeuginnenraumes längs dieser Karosserie-D-Säulen, jeweils in D-Säulen-Verkleidungsteilen integriert. Durch die erfindungsgemäße Lösung kann das Funktionsprofil äußerst leichtgängig in den Führungsprofilierungen verfahren werden. Dadurch, dass das Funktionsprofil in den Führungsprofilierungen nicht mehr gleitend sondern rollbeweglich geführt wird, ist neben dem reduzierten Widerstand auch eine reduzierte Geräuschentwicklung erreichbar. Vorzugsweise sind die Rollelemente jeweils um eine einzelne Drehachse drehbeweglich gelagert. Als Rollelemente sind Räder, Rollen, Walzen oder Kugeln wie auch andere Arten von rotationsbeweglichen Körpern vorgesehen. Es ist möglich, als Rollelemente Kugeln vorzusehen, die in einem Kugelkäfig oder einer Kugelpfanne in allen Freiheitsgraden und damit um alle räumlichen Drehachsen drehbeweglich gelagert sind.

In Ausgestaltung der Erfindung sind an jedem Stirnendbereich mehrere Rollelemente mit zueinander parallelen oder orthogonalen Drehachsen vorgesehen, die jeweils unterschiedlichen räumlichen Flächenbereichen in jeder Führungsprofilierung für eine stützende oder abrollende Anlage zugeordnet sind. Diese Rollelemente sind somit versetzt zueinander angeordnet. Die Rollelemente müssen nicht gleichzeitig und über die gesamte Länge der jeweiligen Führungsprofilierung an den unterschiedlichen räumlichen Flächenbereichen anliegen. Vielmehr ist auch eine lediglich abschnittsweise Anlage im Bereich unterschiedlicher Wegabschnitte der Führungsprofilierungen möglich. Die gleichzeitige stützende Anlage von wenigstens zwei Rollelementen an zueinander beabstandeten Flächenbereichen jeder Führungsprofilierung, die vorzugsweise als Begrenzungsflächen der Führungsprofilierung ausgeführt sind, ermöglicht eine positionsgetreue, spielfreie Zwangsführung des Funktionsprofiles über einen entsprechenden Wegabschnitt der Führungsprofilierungen. Die Führungsprofilierungen sind vorzugsweise an gegenüberliegenden Begrenzungsseiten des Fahrzeuginnenraumes angeordnet und parallel zueinander ausgerichtet. Die Drehachsen der Rollelemente sind parallel zu einer Mittellängsachse des Funktionsprofiles ausgerichtet.

In weiterer Ausgestaltung der Erfindung ist wenigstens ein Rollelement stirnseitig des Stirnendbereiches angeordnet. Ein derartiges Rollelement ist somit in Verlängerung des jeweiligen Stirnendbereiches angeordnet.

In weiterer Ausgestaltung der Erfindung ist wenigstens ein Rollelement längsseitig des Stirnendbereiches angeordnet. Ein derartiges Rollelement ragt vorzugsweise nicht über die Stirnseite des Stirnendbereiches hinaus und ist seitlich an dem Stirnendbereich angeordnet. Die Rollelemente sind in jedem Fall so ausgerichtet, dass sie längs der Bewegungsrichtungen des Funktionsprofiles ausgerichtet sind, um bei einer entsprechenden Längsbewegung des Funktionsprofiles die gewünschten Abrollbewegungen zu ermöglichen.

In weiterer Ausgestaltung der Erfindung ist wenigstens ein Stirnendbereich entlang einer Profillängsachse des Funktionsprofiles teleskopartig verlagerbar angeordnet. In weiterer Ausgestaltung der Erfindung wirkt auf den Stirnendbereich in wenigstens einer Axialrichtung der Profillängsachse eine Stützkrafteinrichtung. Diese Ausgestaltungen ermöglichen die Nachführung der Stirnendbereiche längs von in der Bewegungsebene des Funktionsprofiles gekrümmten Verläufen der Führungsprofilierungen. Sobald die gegenüberliegenden Führungsprofilierungen im Verlauf des Führungsweges ihren Abstand zueinander verändern, passt sich die Breite des Funktionsprofiles durch entsprechende Verlagerung wenigstens eines Stirnendbereiches zwangsläufig an. Die Stützkrafteinrichtung dient dazu, eine permanente stirnseitige Anlage der Stirnendbereiche zu ermöglichen, um sich entsprechend ändernde Verläufe der Führungsprofilierungen sofort erfassen zu können und anhand einer Zwangsführung die Anpassung zu bewirken.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt schematisch in perspektivischer Darstellung eine Ausführungsform eine erfindungsgemäßen Funktionseinheit,
- Fig. 2: in vergrößerter, perspektivischer Darstellung einen Ausschnitt der Funktionseinheit nach Fig. 1,
- Fig. 3: in weiter vergrößerter Darstellung schematisch einen Querschnitt durch ein Funktionsprofil der Funktionseinheit nach den Figuren 1 und 2, und
- Fig. 4: in perspektivischer Darstellung einen Ausschnitt einer weiteren Funktionseinheit ähnlich den Figuren 1 bis 3.

Ein Fahrzeuginnenraum für ein Kraftfahrzeug, vorliegend für einen Personenkraftwagen mit Steilheck, weist einen Laderaum 1 auf, der hinter einer Fondsitzbank eines Personenbeförderungsbereiches des Fahrzeuginnenraumes angeordnet ist. Der Laderaum kann durch Verlagern oder Umklappen einer Rückenlehnenanordnung der Fondsitzbank nach vorne erweitert werden. Als Funktionseinheit in Form einer Laderaumabdeckung ist eine Abdeckplane 2 vorgesehen, die ein flexibles Flächengebilde darstellt, das auf einer in einem Kassettengehäuse drehbeweglich gelagerten Wickelwelle auf- und abwickelbar gehalten ist. Auf die Wickelwelle wirkt in grundsätzlich bekannter Weise eine Rückholfeder, die die Wickelwelle in Aufwickelrichtung federkraftbeaufschlagt. In unbelastetem Zustand wird die Abdeckplane 2 daher in ihre in dem Kassettengehäuse aufgewickelte Ruheposition überführt. Das Kassettengehäuse ist im Bereich der Rückenlehnenanordnung etwa auf Höhe einer Fahrzeugbordkante der Fahrzeugkarosserie und des Fahrzeuginnenraumes fahrzeugfest angeordnet.

Die Abdeckplane 2 weist an ihrem in Ausziehrichtung vorderen Stirnbereich ein Funktionsprofil in Form einer formstabilen Auszugleiste 3 auf, die sich quer zur Ausziehrichtung über die gesamte Breite der Abdeckplane 2 erstreckt und zu beiden Seiten über einen jeweiligen Seitenrandbereich der Abdeckplane 2 nach außen abragt. Diese nach außen abragenden Bereiche sind Stirnendbereiche 4 der Auszugleiste 3. Mit der Auszugleiste 3 verbunden ist zudem ein nicht näher bezeichnetes, formstabiles Konturteil, das in ausgezogenem Zustand der Abdeckplane 2 einen noch verbleibenden Freiraum zwischen der Heckklappe und der Auszugleiste 3 verschließt.

Die Abdeckplane 2 ist in ihrem Abdeckzustand etwa horizontal aus dem Kassettengehäuse zum Fahrzeugheck hin ausgezogen und in fahrzeugfesten Aufnahmen 7a vorzugsweise durch Einhängen lösbar festgelegt. Die Rückholkraft der Rückholfederanordnung, die auf die Wickelwelle wirkt, strafft die Abdeckplane 2 in ihrer eingehängten Abdeckposition. Zum Fixieren der Abdeckplane 2 in ihrer ausgezogenen Funktionsposition sind die Stirnendbereiche 4 der Auszugleiste 3 in die fahrzeugseitigen Aufnahmen 7a eingehängt und dort zwangsläufig in nutförmige Führungsprofilierungen 7b geführt, die sich längs von heckseitigen Karosserieseitensäulen der Fahrzeugkarosserie etwa auf Höhe der Fahrzeugbordkante ansetzend schräg nach oben bis in einen Dachrahmenbereich erstrecken. Auch die fahrzeugfesten Aufnahmen 7a sind auf Höhe der heckseitigen Karosseriesäulenbereiche in Seitenwandverkleidungen 5 beidseitig der Heckklappe vorgesehen. Die fahrzeugseitigen Aufnahmen 7a sind als schikanenartig gekrümmte Führungsnutabschnitte ausgeführt, die an ihrem unteren Endbereich derart offen gestaltet sind, dass die Stirnendbereiche 4 der Auszugleiste 3 bei einer Ausziehbewegung der Abdeckplane 2 zwangsläufig in diese Aufnahmen 7a eingeführt werden können.

Auch die nutförmigen Führungsprofilierungen 7b sind vorzugsweise derart räumlich in Seitenverkleidungsteilen 6 oberhalb der Fahrzeugbordkante längs der heckseitigen Karosserieseitensäulen angeordnet, dass die Führungsprofilierungen 7b nicht über eine zur Innenraummitte weisende Verkleidungskontur der Innenraumverkleidung hinausragen. Die Führungsprofilierungen 7b fügen sich bündig in die Innenraumverkleidung ein. An den schikanenartigen Führungsnutabschnitten 7a auf jeder Fahrzeuglängsseite schließt nach oben die sich schräg nach oben und in Fahrzeuglängsrichtung nach vorne erstreckende Führungsprofilierung 7b an. Die Auszugleiste 3 würde mit ihren Stirnendbereichen 4 längs dieser Führungsprofilierungen 7b nach vorne und nach oben durch die wirkende Rückholkraft der Rückholfederanordnung der Wickelwelle gezwungen werden. Um dies zu verhindern, ist etwa auf Höhe der Fahrzeugbordkante ein Blockierelement 11 vorgesehen, das in seiner Blockierposition in die jeweilige Führungsprofilierung 7b hineinragt und einen formschlüssigen Anschlag für die Auszugleiste 3 an jedem Stirnendbereich 4 bildet. Die beiden Blockierelemente 11 in den gegenüberliegenden Führungsprofilierungen 7b sind zwischen der Blockierposition und einer Freigabeposition beweglich gelagert. Um die Blockierelemente 11 aus ihrer Blockierposition in die Freigabeposition zu überführen, in der sie aus dem Führungsraum jeder Führungsprofilierung 7b herausbewegt sind, ist jedem Blockierelement 11 ein nicht näher dargestelltes Steuerglied zugeordnet. Die Steuerglieder werden durch eine Steuereinheit gemeinsam oder synchronisiert angesteuert, um eine gleichzeitige Freigabe oder ein gleichzeitiges Überführen der Blockierelemente 11 in die Blockierposition zu ermöglichen.

Um ein äußerst leichtgängiges Verfahren des Stirnendbereiches 4 in den Führungsprofilierungen 7b zu ermöglichen und so sicherzustellen, dass nach einem Freigeben der Stirnendbereiche 4 die Rückholkraft der Rückholfederanordnung der Wickelwelle in jedem Fall ausreicht, um die Auszugleiste 3 und damit die Abdeckplane 2 in eine obere Komfortposition in einem oberen, vorderen Endbereich der Führungsprofilierungen 7b zu überführen, sind beide Stirnendbereiche 4 der Auszugleiste 3 mit Rollelementen 9, 10 versehen, die auf oberen und unteren Führungsflächen F₁, F₂ zumindest zeitweilig oder abschnittsweise abwälzen. Beide Rollelemente 9, 10 sind als Kunststoffrollen ausgeführt und um zueinander parallele Drehachsen drehbeweglich an dem Stirnendbereich 4 gelagert, die parallel zu einer Mittellängsachse der Auszugleiste 3 ausgerichtet sind. Beide Rollelemente 9, 10 ragen zumindest abschnittsweise über die Umfangskontur des Stirnendbereiches 4 hinaus, um zu gewährleisten, dass jeder Stirnendbereich 4 sich an den Führungsflächen F₁, F₂ der jeweiligen Führungsprofilierung 7b ausschließlich über die Rollelemente 9, 10 abstützt, ohne dass ein Außenkonturabschnitt des jeweiligen Stirnendbereiches 4 zusätzlich noch an einer der Führungsflächen der Führungsprofilierung 7b in gleitende Berührung gelangt.

Das Rollelement 9 ist in einem Stützabschnitt 8 des Stirnendbereiches 4 gelagert, der eine schlitz- oder nutartige Aufnahme für die Einbettung des Rollelementes 9 aufweist. Der Stützabschnitt 8 lagert das Rollelement 9 exzentrisch zu einer Mittellängsachse der Auszugleiste. Der Stützabschnitt 8 ist starr mit dem Stirnendbereich 4 verbunden oder ein einstückiger Fortsatz des Stirnendbereiches 4.

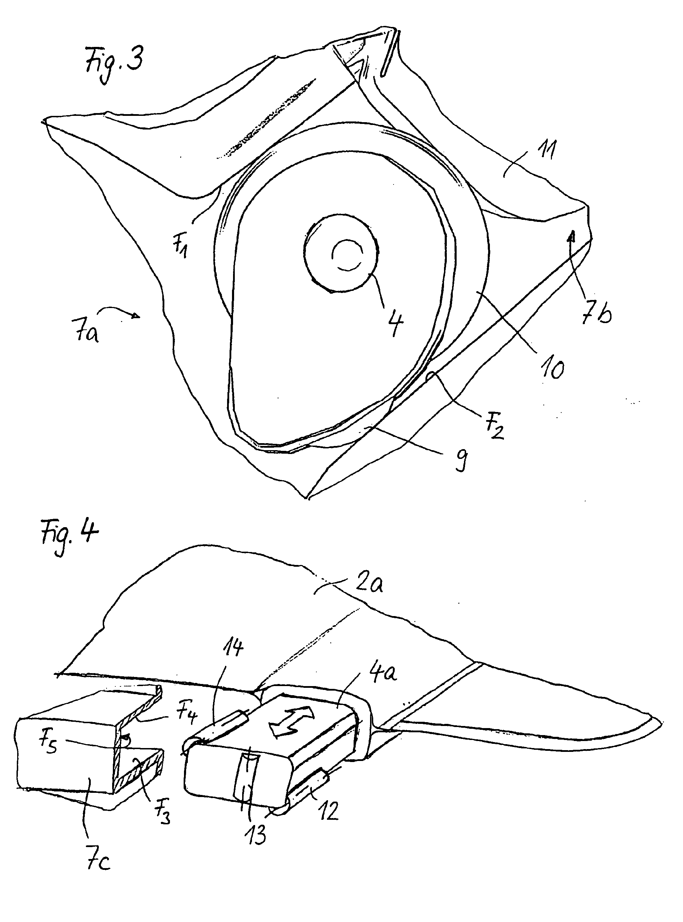

Das zweite Rollelement 10 ist stirnseitig an dem Stirnendbereich 4 und damit an dem Stützabschnitt 8 gelagert und weist einen so großen Durchmesser auf, dass das Rollelement 10 sich gleichzeitig an der oberen Führungsfläche F₁ und einer Anschlagfläche des Blockierelementes 11 abstützen kann. Der Durchmesser des Rollelementes 10 ist, wie anhand der Fig. 3 erkennbar ist, aber geringer als die Höhe der Führungsprofilierung 7b, so dass das Rollelement 10 in seiner Anlageposition an dem Blockierelement 11 und der oberen Führungsfläche F₁ in Abstand zu der unteren Führungsfläche F₂ gehalten ist. Wie anhand der Fig. 3 auch erkennbar ist, sind die Drehachsen der Rollelemente 9, 10 relativ zu einer Mittellängsachse der Auszugleiste 3 und damit des Stirnendbereiches 4 radial und in Umfangsrichtung versetzt zueinander angeordnet. Insbesondere das Rollelement 9 ist somit exzentrisch zu der Mittellängsachse der Auszugleiste 3 angeordnet. Diese Ausführung ist zweckmäßig, da das zuvor beschriebene, formstabile Konturteil, das zum Fahrzeugheck hin an die Auszugleiste 3 ansetzt, auf die Auszugleiste 3 und damit auch auf die Stirnendbereiche 4 ein Kippmoment ausübt. Dadurch, dass die zueinander versetzten Rollelemente 9, 10 vorgesehen sind, führt dieses Kippmoment zwangsläufig dazu, dass das äußere Rollelement 10 sich stabil an der oberen Führungsfläche F₁ und das untere Rollelement 9 sich stabil an der unteren Führungsfläche F₂ abstützt. Dadurch wird nach dem Freigeben der Auszugleiste durch das Entfernen des Blockierelementes 11 eine stabile, spielfreie Rollbewegung jedes Stirnendbereiches 4 längs der Führungsprofilierungen 7b erreicht. Durch die stabile Führung der Auszugleiste aufgrund der ober- und unterseitigen Anlage der Rollelemente 9, 10 wird das formstabile Konturteil während des gesamten Bewegungsweges der Auszugleiste schräg nach oben in einer stabilen, gleichbleibenden Kippstellung gehalten.

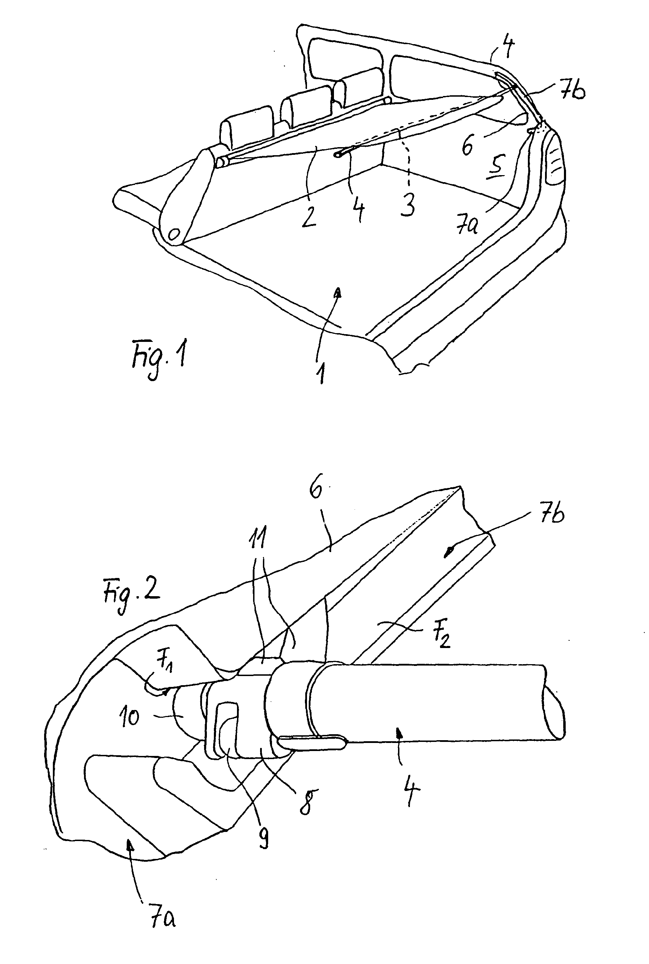

Um die Abdeckplane 2 aus einer in dem Kassettengehäuse aufgewickelten Ruheposition in die Abdeckposition zu überführen, wird die Abdeckplane 2 von Hand etwa horizontal nach hinten ausgezogen. Vorzugsweise ist hier im Bereich des Konturteiles in nicht näher dargestellter Weise ein Griffelement oder eine Griffaussparung vorgesehen, die das Ergreifen der Abdeckplane 2 von Hand erleichtert. Im Heckbereich des Laderaumes 1 werden die Stirnendbereiche 4 in die offenen, an den gegenüberliegenden Seitenwänden des Laderaumes angeordneten Bereiche der Führungsnutabschnitte 7a eingeführt, über die in Fig. 2 dargestellte Schikane jeweils nach oben geführt, und anschließend losgelassen oder freigegeben, indem die entsprechende Bedienperson ihre Hand von dem Konturteil entfernt. Durch die Wegnahme der manuellen Bedienkraft übt die Rückholkraft der Rückholfederanordnung der Wickelwelle eine Zugbelastung auf die Abdeckplane 2 in Aufwickelrichtung auf, wodurch die Stirnendbereiche 4 der Auszugleiste 3 gegen die Blockierelemente 11 gedrückt werden. Die Blockierelemente 11 sind etwa auf Höhe der Fahrzeugbordkante in ihrer Blockierposition positioniert, so dass die Abdeckplane 2 in dieser stabilen Position sich in etwa horizontal ausgezogenem Abdeckzustand befindet. Falls nun die Heckklappe oder vorzugsweise ein oberer Scheibenteil der Heckklappe geöffnet wird, wird gemeinsam mit dem Betätigen, d.h. dem Öffnen, des Heckklappenschlosses jedes Blockierelement 11 angesteuert und bewegt sich in seine Freigabeposition, wodurch die auf die Abdeckplane 2 in Aufwickelrichtung wirkende Rückholkraft die Auszugleiste 3 und die Stirnendbereiche 4 längs der Führungsprofilierungen 7b nach vorne und nach oben bis zu dem vorderen, oberen Endbereich der Führungsprofilierungen 7b verfährt. In dieser Position bildet die Abdeckplane 2 eine Komfortstellung, da der unter der Abdeckplane 2 befindliche Laderaumbereich von dem geöffneten Teil der Heckklappe aus bequem zugänglich ist. Sobald die Bedienperson den Zugriff auf den Laderaum 1 nicht mehr benötigt, führt die Bedienperson die Abdeckplane 2 von Hand wieder in die horizontale Abdeckposition zurück. Beim Vorbeiführen des Stirnendbereiches 4 an den Blockierelementen 11 rasten diese automatisch wieder in ihre Blockierposition ein, so dass die stabile Abdeckposition für die Abdeckplane 2 wieder erreicht ist. Nun kann der Heckklappenteil, vorzugsweise der Scheibenteil, geschlossen werden.

Bei nicht dargestellten Ausführungsbeispielen der Erfindung sind halbautomatische Bewegungsvorgänge der Abdeckplane 2 vorgesehen. Die erneute Rücküberführung der Abdeckplane 2 aus ihrer oberen Komfortstellung in die Abdeckposition erfolgt bei derartigen Ausführungsformen durch Antriebsmittel, so dass eine manuelle Bedienung bzw. ein manuelles Rückführen der Abdeckplane in die Abdeckposition nicht mehr benötigt wird. Bei derartigen Ausführungsformen ist es auch möglich, dass bereits längs der horizontalen Ausziehbewegung der Abdeckplane 2 flankierende Führungsprofilierungen zugeordnet sind, in denen die mit den Rollelementen versehenen Stirnendbereiche laufen. Vorzugsweise sind auch diese horizontalen Führungsprofilierungen mit Antriebsmitteln versehen, um ein automatisches Überführen der Abdeckplane in die Abdeckposition zu ermöglichen. Eine manuelle Bedienung ist bei derartigen Ausführungsformen entbehrlich.

Bei der Ausführungsform nach Fig. 4 ist eine Abdeckplane 2a vorgesehen, die analog der Ausführungsform nach den Figuren 1 bis 3 auf- und abwickelbar auf einer Wickelwelle eines Kassettengehäuses oder einer ähnlichen Aufnahmevorrichtung gehalten ist. Auch die Abdeckplane 2a ist in ihrem in Auszugrichtung vorderen Stirnbereich mit einer Auszugleiste versehen, der ein formstabiles Konturteil zugeordnet ist. Die Auszugleiste weist ein rechteckiges Querschnittsprofil auf. Die Auszugleiste ist mit ihren gegenüberliegenden Stirnendbereichen 4a in horizontalen, schienenförmigen Führungsprofilierungen 7c in einem nicht näher dargestellten Fahrzeuginnenraum geführt. Die Führungsprofilierung 7c weist eine untere Führungsfläche F₃, eine obere Führungsfläche F₄ sowie eine äußere Führungsfläche F₅ auf. Alle drei Führungsflächen F₃ bis F₅ sind eben gestaltet und orthogonal ähnlich einem C-Profil aneinandergefügt. Jeder Führungsfläche F₃ bis F₅ ist an dem Stirnendbereich 4a jeweils ein Rollelement 12 bis 14 zugeordnet. Die Rollelemente 12 bis 14 weisen zu den Führungsflächen F₃ bis F₅ jeweils parallele Drehachsen auf und sind teilweise versenkt in der Außenkontur des Stirnendbereiches 4a gelagert. Alle Rollelemente sind walzenförmig ausgeführt. Ein unteres Rollelement 12 ist an einer in Auszugrichtung vorderen Kante des Stirnendbereiches 4a, ein oberes Rollelement 14 an einer in Auszugrichtung oberen und hinteren Kante des Stirnendbereiches 4a und das äußere Rollelement 13 an der Stirnfläche des Stirnendbereiches 4a gelagert. Zudem sind die Stirnendbereiche 4a gemäß dem in Fig. 4 dargestellten Doppelpfeil teleskopförmig relativ zu der Auszugleiste beweglich gelagert, so dass sie sich in bestimmten Grenzen koaxial verlagern können. Dadurch ist eine Änderung der Länge der Auszugleiste ermöglicht. Diese Ausführungsform ist insbesondere vorteilhaft, falls sich die gegenüberliegenden Führungsprofilierungen 7c nicht parallel zueinander erstrecken, sondern vielmehr ihren Abstand zueinander im Verlauf ihrer Länge verändern. Die Verläufe der Führungsprofilierungen können sich somit relativ zueinander verjüngen oder erweitern. Die Stirnendbereiche 4a sind längs der Auszugleiste durch eine Stützkrafteinrichtung nach außen kraftbeaufschlagt, vorzugsweise druckfederbelastet, um die Stirnfläche und damit das äußere Rollelement 13 jedes Stirnendbereiches 4a permanent gegen die seitliche Führungsfläche F₅ zu pressen. Dadurch nimmt der jeweilige Stirnendbereich 4a automatisch nach innen oder nach außen erfolgende Krümmungsverläufe der Führungsprofilierung 7c wahr und passt sich entsprechend an.

Bei den dargestellten Ausführungsbeispielen sind als Funktionseinheiten Laderaumabdeckungen vorgesehen. Es ist aber auch möglich, andere Arten von Funktionseinheiten für einen Fahrzeuginnenraum vorzusehen, die wenigstens ein Funktionsprofil aufweisen, das sich längs von Führungsprofilierungen innerhalb des Fahrzeuginnenraumes verlagern lässt. Als Funktionseinheiten sind insbesondere Trennnetze oder anders gestaltete Trenngebilde geeignet, die etwa vertikal nach oben in eine Schutzposition ausgezogen werden können, in denen ein Laderaum von einem Fahrgastraum getrennt wird. Auch taschenartige Hängeaufnahmen, die im Laderaum verschiebbar angeordnet sind, können durch erfindungsgemäße Funktionseinheiten gebildet werden. Gleiches gilt für zumindest abschnittsweise formstabile Segmentierungsteile, die in den entsprechenden Funktionsprofilierungen innerhalb des Laderaumes verlagert werden können, um variable Raumabschnitte zu schaffen.

## Patentansprüche

1. Funktionseinheit für einen Fahrzeuginnenraum mit einem formstabilen Funktionsprofil, das zwei einander gegenüberliegende Stirnendbereiche aufweist, die entlang von fahrzeuginnenraumseitig angeordneten Führungsprofilierungen längsbeweglich angeordnet sind, wobei jeder Stirnendbereich (4, 4a) mit wenigstens einem Rollelement (9, 12, 14) versehen ist, **dadurch gekennzeichnet, dass** das Rollelement um eine zu einer Mittellängsachse des Funktionsprofiles parallele Drehachse derart drehbeweglich an dem Stirnendbereich (4, 4a) gelagert ist, dass das Rollelement (9, 10; 12 bis 14) bei einer Längsbewegung des Stirnendbereiches (4, 4a) auf wenigstens einem Flächenbereich (F₁ bis F₄) der zugeordneten Führungsprofilierung (7b, 7c) abrollt.

2. Funktionseinheit nach Anspruch 1, **dadurch gekennzeichnet, dass** an jedem Stirnendbereich (4, 4a) mehrere Rollelemente (9, 10; 12 bis 14) mit zueinander parallelen oder orthogonalen Drehachsen vorgesehen sind, die jeweils unterschiedlichen räumlichen Flächenbereichen (F₁ bis F₅) jeder Führungsprofilierung (7b, 7c) für eine stützende oder abrollende Anlage zugeordnet sind.

3. Funktionseinheit nach Anspruch 2, **dadurch gekennzeichnet, dass** wenigstens ein Rollelement (10, 13) stirnseitig des Stirnendbereiches (4, 4a) angeordnet ist.

4. Funktionseinheit nach Anspruch 2, **dadurch gekennzeichnet, dass** wenigstens ein Rollelement (9, 12, 14) längsseitig des Stirnendbereiches (4, 4a) angeordnet ist.

5. Funktionseinheit nach Anspruch 1, **dadurch gekennzeichnet, dass** wenigstens ein Stirnendbereich (4a) entlang einer Profillängsachse des Funktionsprofiles teleskopartig verlagerbar ist.

6. Funktionseinheit nach Anspruch 5, **dadurch gekennzeichnet, dass** auf den Stirnendbereich (4a) in wenigstens einer Axialrichtung der Profillängsachse eine Stützkrafteinrichtung wirkt.

## Claims

1. A functional unit for a vehicle interior, having a dimensionally stable functional profile which has two mutually opposite end regions which are arranged in a longitudinally movable manner along profiled guide structures arranged in the vehicle interior, wherein each end region (4, 4a) is provided with at least one rolling element (9, 12, 14), **characterized in that** the rolling element is mounted on the end region (4, 4a) in a manner that it can rotate about an axis of rotation arranged parallel to a median longitudinal axis of the functional profile in such a way that, during a longitudinal movement of the end region (4, 4a), the rolling element (9, 10; 12 to 14) runs along at least one surface region (F₁ to F₄) of the associated profiled guide structure (7b, 7c).

2. The functional unit as claimed in claim 1, **characterized in that** a plurality of rolling elements (9, 10; 12 to 14) having mutually parallel or orthogonal axes of rotation are provided in each end region (4, 4a) and are assigned in each case to different spatial surface regions (F₁ to F₅) of each profiled guide structure (7b, 7c) to provide a supporting or rolling bearing.

3. The functional unit as claimed in claim 2, **characterized in that** at least one rolling element (10, 13) is arranged in the end side of the end region (4, 4a).

4. The functional unit as claimed in claim 2, **characterized in that** at least one rolling element (9, 12, 14) is arranged on the longitudinal side of the end region (4, 4a).

5. The functional unit as claimed in claim 1, **characterized in that** at least one end region (4a) can be displaced telescopically along a longitudinal axis of the functional profile.

6. The functional unit as claimed in claim 5, **characterized in that** a supporting-force device acts on the end region (4a) in at least one axial direction of the longitudinal axis of the profile.

## Revendications

1. Unité fonctionnelle pour l'habitacle d'un véhicule avec un profil fonctionnel indéformable présentant deux sections d'extrémité frontales opposées et disposées, de manière à pouvoir se déplacer longitudinalement, le long de profilés de guidage placés sur les côtés de l'habitacle du véhicule, sachant que chaque section d'extrémité frontale (4, 4a) est pourvue d'au moins un élément roulant (9, 12, 14), **caractérisée en ce que** l'élément roulant est logé dans la section d'extrémité frontale (4, 4a) de façon à pouvoir tourner autour d'un axe de rotation parallèle à un axe médian longitudinal du profil fonctionnel, et ce de telle manière que l'élément roulant (9, 10 ; 12 à 14) roule le long d'au moins une section de la surface (F₁ à F₄) du profilé de guidage associé (7b, 7c) lors d'un mouvement longitudinal de la section d'extrémité frontale (4, 4a).

2. Unité fonctionnelle selon la revendication 1, **caractérisée en ce que** plusieurs éléments roulants (9, 10 ; 12 à 14) présentant des axes de rotation réciproquement parallèles ou orthogonaux sont prévus sur chaque section d'extrémité frontale (4, 4a) et sont associés respectivement à différentes sections spatiales de la surface (F₁ à F₅) de chaque profilé de guidage (7b, 7c) pour obtenir un support d'appui ou déroulant.

3. Unité fonctionnelle selon la revendication 2, **caractérisée en ce qu'**au moins un élément roulant (10, 13) est disposé sur la face avant de la section d'extrémité frontale (4, 4a).

4. Unité fonctionnelle selon la revendication 2, **caractérisée en ce qu'**au moins un élément roulant (9, 12, 14) est disposé sur la face longitudinale de la section d'extrémité frontale (4, 4a).

5. Unité fonctionnelle selon la revendication 1, **caractérisée en ce qu'**au moins une section d'extrémité frontale (4a) peut être déplacée de manière télescopique le long d'un axe longitudinal du profil fonctionnel.

6. Unité fonctionnelle selon la revendication 5, **caractérisée en ce qu'**un dispositif de force d'appui agit sur la section d'extrémité frontale (4a) dans au moins une direction axiale de l'axe longitudinal du profil.
